# EUROPEAN PATENT SPECIFICATION

(11) **EP 2 658 948 B1**
(45) Date of publication and mention of the grant of the patent: **03.10.2018**
(21) Application number: 11715161.3
(22) Date of filing: 22.03.2011
(51) Int. Cl.: C10B 47/18, C10B 53/02

(54) **BIOCHAR MACHINE AND PROCESS FOR TREATING AGRICULTURAL WASTE**
BIOKOHLEMASCHINE UND VERFAHREN ZUR BEHANDLUNG VON LANDWIRTSCHAFTLICHEN ABFÄLLEN
MACHINE À BIOCHAR ET PROCÉDÉ POUR LE TRAITEMENT DES DÉCHETS AGRICOLES

(30) Priority: 02.11.2010 EG 2010111853
(43) Date of publication of application: 06.11.2013
(73) Proprietor: Mansour, Rawya Lofty, 98000 Monaco (MC)
(72) Inventor: Mansour, Rawya Lofty, 98000 Monaco (MC)
(74) Representative: Hautier IP
(86) International application number: PCT/EG2011/000003
(87) International publication number: WO 2012/059113

(56) References cited:
- WO-A1-00/31212
- BR-A- PI0 701 010
- CN-A- 101 240 904
- DE-A1- 3 020 798
- US-A- 4 164 397

## Description

### Technical Field:

The objective of this invention to the grinding of agricultural waste and turn them into material Biochar by burning in isolation from the air inside the oven and are Coking and milling in one oven

### Background Art:

Agricultural waste is charred by burning in the absence of oxygen, then, taken out from the charring furnaces to be ground and turned into Biochar.

In addition to this process being economically costly, it affects the environment as it involves transporting the coal from the char furnaces, then grinding and packing the ground material in various packages.

WO-A-00/31212 discloses a pyrolysing equipment. BR-A-PI0701010 discloses a process and apparatus for carbonising biomass, wherein a water sprayer is placed inside the processing tank.

The novelty of this invention is that charring and grinding take place in one furnace, after which the Biochar is taken out for packing.

### Disclosure of the Invention

The Biochar machine consists of a sealed processing tank wherein the rice straw is placed. The container has an opening in the lower part for exit of the Biochar and an opening in the upper part for entry of the rice straw. In the middle of the container, there is an electrically-powered agitator, a conveyer belt and a speed reducing system.

The machine is equipped with water sprayers to spray the hot Biochar with water directly before it comes out of the container. The spraying unit consists of a pump, pipes, links, sittings and sprayers.

The Biochar unit also contains a combustion unit consisting of a burner to burn the fuel adjacent to the container to heat the rice straw air free from all directions. The gases collected inside the container are drawn out to the combustion chamber by means of a vacuum ventilator operated by an electric motor.

### Brief Disclosure of drawing

**1. Sealed charring processing tank:** a cylindrical shaped container for putting rice straw bales or any other agriculture waste therein.
**2. Ventilator:** for drawing the gases from inside the charring container and sending to the burner to accelerate the burning process and thereby reducing fuel consumption and preventing contamination of air by gas emissions during the charring process.
**3. Gases Route:** return of char gases from the charring chamber to the burner.
**4. Agitator:** for mixing and turning over the agricultural waste inside the sealed processing tank.
**5. Burner:** for burning the fuel and supplying the unit with the necessary thermal energy.
**6. Chimney:** for getting rid of the gases resulting from burning.
**7. Water sprayers:** for cooling the Biochar before exiting the charring unit.
**8. Speed-reducing unit:** for turning over the rice straw to guarantee uniformity of the charring process as well as grinding the rice straw.
**9. Thermostat:** for controlling the charring temperature.

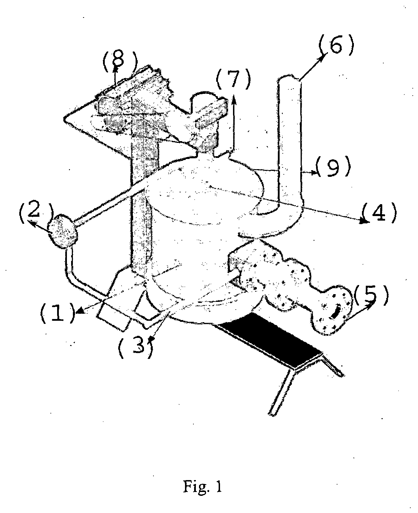

## Claims

1. Biochar machine for charring agricultural wastes into biochar, comprising a processing tank (1) where agriculture wastes can be placed in isolation from air, the processing tank (1) comprising an agitator (4) for grinding agriculture wastes, wherein the machine further comprises water sprayers (7) configured to spray water on biochar within the processing tank to reduce the cooling time, wherein the agitator (4) is electrically-powered, the rotation shaft of the agitator (4) passing through the upper part of the processing tank (1), and wherein the processing tank (1) has an opening in the lower part to exit the biochar and an opening in the upper part to enter agriculture wastes.

2. Biochar machine according to claim 1 or 2 wherein the processing tank has a combustion unit consisting of a burner (5) for burning fuel adjacent to the processing tank (1) configured to heat agriculture wastes air free, from all directions.

3. Biochar machine according to claim 2 comprising a gases route (3) to return char gases from the processing tank (1) to the burner (5) and a vacuum ventilator (2) within the gases route (3) and configured to draw gases from the processing tank (1) to the combustion unit, said ventilator (2) being operated by an electric motor.

4. Biochar machine according to any of the preceding claims, comprising an inversed L-shape structure including:
- a pole extending upwards aside the processing tank and comprising an upper end holding a speed-reducing unit;
- a bar extending laterally from the upper end of the pole to a space region located above the processing tank, the bar comprising a distal end portion configured to guide the rotation shaft of the agitator;
- a belt extending between the speed reducing unit and a pulley and configured to transfer power from the speed reducing unit to the rotation shaft.

5. Process for charring agriculture waste into biochar **characterized in that** it uses biochar machine according to claims 1 to 4 and it comprises the following successive steps of
- placing agriculture wastes into the processing tank (1) without cutting through an opening in the upper part of the processing tank,
- grinding agriculture wastes by an agitator (4) within the processing tank (1), wherein the agitator (4) is electrically-powered, the rotation shaft of the agitator (4) passing through the upper part of the processing tank (1), and simultaneously heating agriculture wastes air free inside the processing tank (1),
- then spraying water on biochar within the processing tank with water sprayers (7) before exiting the biochar from the processing tank (1) thereby reducing the cooling time;
- exiting the biochar from the processing tank (1) through an opening in the lower part of the processing tank (1).

## Patentansprüche

1. Biokohleanlage zum Verkohlen von landwirtschaftlichen Abfällen zu Biokohle, umfassend einen Verarbeitungstank (1), in dem landwirtschaftliche Abfälle unter Abschluss von Luft gebracht werden können, wobei der Verarbeitungstank (1) einen Rührer (4) zum Zerkleinern von landwirtschaftlichen Abfällen umfasst, wobei die Anlage weiter Wassersprüher (7) umfasst, die dazu ausgebildet sind, Wasser auf Biokohle innerhalb des Verarbeitungstanks zu sprühen, um die Kühlzeit zu verringern, wobei der Rührer (4) elektrisch angetrieben ist, wobei die Drehwelle des Rührers (4) durch den oberen Teil des Verarbeitungstanks (1) verläuft, und wobei der Verarbeitungstank (1) eine Öffnung im unteren Teil aufweist, um die Biokohle auszuleiten, und eine Öffnung im oberen Teil, um landwirtschaftliche Abfälle einzuleiten.

2. Biokohleanlage nach Anspruch 1 oder 2, wobei der Verarbeitungstank eine Verbrennungseinheit aufweist, die aus einem Brenner (5) zum Verbrennen von Kraftstoff angrenzend an den Verarbeitungstank (1) besteht, die dazu ausgebildet ist, landwirtschaftliche Abfälle frei von Luft aus allen Richtungen zu erhitzen.

3. Biokohleanlage nach Anspruch 2, umfassend eine Gasstrecke (3), um Kohlegase aus dem Verarbeitungstank (1) zum Brenner (5) zurückzuleiten, und einen Unterdrucklüfter (2) innerhalb der Gasstrecke (3) und dazu ausgebildet, Gase aus dem Verarbeitungstank (1) zur Verbrennungseinheit zu ziehen, wobei der Lüfter (2) von einem Elektromotor angetrieben wird.

4. Biokohleanlage nach einem der vorstehenden Ansprüche, die eine umgekehrt L-förmige Struktur aufweist, welche einschließt:
- einen Pfosten, der sich neben dem Verarbeitungstank nach oben erstreckt und ein oberes Ende umfasst, das eine Untersetzungseinheit hält;
- eine Stange, die sich seitlich vom oberen Ende des Pfostens zu einem über dem Verarbeitungstank liegenden Raumbereich erstreckt, wobei die Stange einen distalen Endabschnitt umfasst, der dazu ausgebildet ist, die Drehwelle des Rührers zu führen;
- einen Riemen, der sich zwischen der Untersetzungseinheit und einer Riemenscheibe erstreckt und dazu ausgebildet ist, Leistung von der Untersetzungseinheit auf die Drehwelle zu übertragen.

5. Verfahren zum Verkohlen von landwirtschaftlichem Abfall zu Biokohle, **dadurch gekennzeichnet, dass** es Biokohleanlage nach den Ansprüchen 1 bis 4 verwendet und es die folgenden aufeinanderfolgenden Schritte umfasst des
- Einbringens von landwirtschaftlichen Abfällen ohne Schneiden in den Verarbeitungstank (1) durch eine Öffnung im oberen Teil des Verarbeitungstanks,
- Zerkleinerns von landwirtschaftlichen Abfällen durch einen Rührer (4) innerhalb des Verarbeitungstanks (1), wobei der Rührer (4) elektrisch angetrieben wird, wobei die Drehwelle des Rührers (4) durch den oberen Teil des Verarbeitungstanks (1) verläuft, und gleichzeitigen Erhitzens von landwirtschaftlichen Abfällen frei von Luft innerhalb des Verarbeitungstanks (1),
- dann Sprühens von Wasser auf Biokohle innerhalb des Verarbeitungstanks mit Wassersprühern (7) vor Ausleiten der Biokohle aus dem Verarbeitungstank (1), wodurch die Kühlzeit verringert wird;
- Ausleitens der Biokohle aus dem Verarbeitungstank (1) durch eine Öffnung im unteren Teil des Verarbeitungstanks (1).

## Revendications

1. Machine à biochar pour la carbonisation de déchets agricoles dans du biochar, comprenant une cuve de traitement (1) où peuvent être placés des déchets agricoles de manière isolée de l'air, la cuve de traitement (1) comprenant un agitateur (4) pour le broyage des déchets agricoles, dans laquelle la machine comprend en outre des pulvérisateurs d'eau (7) configurés pour pulvériser de l'eau sur le biochar à l'intérieur de la cuve de traitement pour réduire le temps de refroidissement, dans laquelle l'agitateur (4) est alimenté électriquement, l'arbre de rotation de l'agitateur (4) passant à travers la partie supérieure de la cuve de traitement (1), et dans laquelle la cuve de traitement (1) possède une ouverture dans la partie inférieure pour faire sortir le biochar et une ouverture dans la partie supérieure pour faire entrer les déchets agricoles.

2. Machine à biochar selon la revendication 1 ou 2, dans laquelle la cuve de traitement possède une unité de combustion constituée d'un brûleur (5) pour brûler le combustible adjacent à la cuve de traitement (1) configurée pour chauffer les déchets agricoles sans air depuis toutes les directions.

3. Machine à biochar selon la revendication 2, comprenant un trajet des gaz (3) pour renvoyer les gaz de carbonisation de la cuve de traitement (1) vers le brûleur (5) et un ventilateur aspirant (2) au sein du trajet des gaz (3) et configuré pour attirer les gaz de la cuve de traitement (1) vers l'unité de combustion, ledit ventilateur (2) étant actionné par un moteur électrique.

4. Machine à biochar selon l'une quelconque des revendications précédentes, comprenant une structure en L inversé incluant :
- un poteau s'étendant vers le haut à l'écart de la cuve de traitement et comprenant une extrémité supérieure maintenant un réducteur de vitesse ;
- une barre s'étendant latéralement depuis l'extrémité supérieure du poteau vers une région d'espace située au-dessus de la cuve de traitement, la barre comprenant une partie d'extrémité distale configurée pour guider l'arbre de rotation de l'agitateur ;
- une courroie s'étendant entre le réducteur de vitesse et une poulie et configurée pour transférer de la puissance du réducteur de vitesse à l'arbre de rotation.

5. Procédé de combustion de déchets agricoles dans du biochar **caractérisé en ce qu'**il utilise une machine à biochar selon les revendications 1 à 4 et **en ce qu'**il comprend les étapes successives suivantes de
- mise en place de déchets agricoles dans la cuve de traitement (1) sans découpe à travers une ouverture dans la partie supérieure de la cuve de traitement,
- broyage des déchets agricoles au moyen d'un agitateur (4) à l'intérieur de la cuve de traitement (1),
dans lequel l'agitateur (4) est alimenté électriquement, l'arbre de rotation de l'agitateur (4) passant à travers la partie supérieure de la cuve de traitement (1), et chauffant simultanément les déchets agricoles sans air à l'intérieur de la cuve de traitement (1),
- puis pulvérisation d'eau sur le biochar à l'intérieur de la cuve de traitement avec des pulvérisateurs d'eau (7) avant de faire sortie le biochar de la cuve de traitement (1), réduisant ainsi le temps de refroidissement ;
- sortie du biochar de la cuve de traitement (1) à travers une ouverture dans la partie inférieure de la cuve de traitement (1).
